# EUROPÄISCHE PATENTANMELDUNG

(11) **EP 3 616 772 A1**
(43) Veröffentlichungstag der Anmeldung: **04.03.2020**
(21) Anmeldenummer: 19194075.8
(22) Anmeldetag: 28.08.2019
(51) Int. Cl.: B01D 46/00, B01D 46/44

(54) **VERFAHREN ZUM REINIGEN VON FILTERN**

(30) Priorität: 29.08.2018 DE 102018121134
(71) Anmelder: DFT GmbH Deichmann Filter Technik, 36179 Bebra (DE)
(72) Erfinder: DEICHMANN, Jochen, 36179 Bebra (DE)
(74) Vertreter: Dantz, Jan Henning

(57) **Zusammenfassung**

Ein Verfahren zum Reinigen von Filtern mit schlauch- oder taschenförmigen Filterkörpern (5), die von einem Filtergehäuse (2) umgeben sind, umfasst die folgenden Schritte: Durchströmen der Filterkörper (5) mit einem zu reinigenden gasförmigen Fluid in eine Durchströmrichtung; Erzeugen eines ersten Druckimpulses an den Filterkörpern (5) gegen die Durchströmrichtung zur Reinigung der Filterkörper (5) durch kurzzeitiges Öffnen mindestens eines Ventils (20) oder mehrerer parallel geschalteter Ventile, und Erzeugen mindestens eines zweiten Druckimpulses an dem Filterkörper (5) gegen die Durchströmrichtung durch kurzzeitiges Öffnen mindestens eines Ventils (20) oder mehrerer parallel geschalteter Ventile zur weiteren Reinigung der Filterkörper (5) während eines Reinigungszyklus. Dadurch kann die Reinigungswirkung während eines Reinigungszyklus für die Filterkörper (5) verbessert werden.

## Beschreibung

Die vorliegende Erfindung betrifft ein Verfahren zur Reinigung von Filtern mit schlauch- oder taschenförmigen Filterkörpern, die von einem Filtergehäuse umgeben sind, mit den folgenden Schritten: Durchströmen der Filterkörper mit einem zu reinigenden gasförmigen Fluid in eine Durchströmrichtung und Erzeugen eines ersten Druckimpulses an den Filterkörpern gegen die Durchströmrichtung zur Reinigung der Filterkörper durch kurzzeitiges Öffnen mindestens eines Ventils.

Die EP 1 997 547 B1 offenbart ein Verfahren zum Rückspülen von Filtern, bei dem mehrere Entnahmeleitungen an einem Druckluftbehälter angeschlossen sind. An jeder Entnahmeleitung ist ein Ventil vorgesehen, das kurzzeitig geöffnet werden kann, um die Druckluft zu einer Spülleitung zu leiten, durch die dann Druckimpulse an Filterkörpern zum Reinigen der Filterkörper erzeugt werden können. Dadurch können die Filterkörper kontinuierlich zur Abgasreinigung eingesetzt werden und müssen nur selten ausgewechselt werden.

Um dieses Verfahren zu verbessern, wurde in de EP 2 602 016 B1 vorgeschlagen, den Druck in dem Reinigungsbehälter abzusenken und die Ventilquerschnitte zu vergrößern um die Strömungsverluste zu reduzieren. Auch bei diesem Verfahren wird über Druckimpulse ein Filterschlauch durch eine Spülleitung gereinigt. Abhängig von dem zu reinigenden Gas kann allerdings ein schnelles Zusetzen der Filterkörper und eine entsprechende Verstopfung stattfinden. Je nach den gefilterten Partikeln können sich unterschiedliche Anforderungen an den Reinigungsvorgang ergeben.

Es ist daher Aufgabe der vorliegenden Erfindung, ein Verfahren zum Reinigen von Filtern zu schaffen, das eine verbesserte Abreinigung der Filterkörper ermöglicht.

Diese Aufgabe wird mit einem Verfahren mit den Merkmalen des Anspruches 1 gelöst.

Erfindungsgemäß wird nach einem ersten Druckimpuls an den Filterkörpern gegen die Durchströmrichtung zur Reinigung der Filterkörper durch kurzzeitiges Öffnen mindestens eines Ventils oder mehrerer parallel geschalteter Ventile mindestens ein zweiter Druckimpuls an den Filterkörpern gegen die Durchströmrichtung zur weiteren Reinigung der Filterkörper während eines Reinigungszyklus erzeugt. Es hat sich herausgestellt, dass durch ein kurzzeitiges Öffnen mindestens eines Ventils oder mehrerer parallel geschalteter Ventile zur Erzeugung von einem oder mehreren weiteren Druckimpulsen die Abreinigung verbessert wird. Ferner kann durch die zusätzlichen Druckimpulse die mechanische Belastung des Filtermaterials verringert werden, da die Filterreinigung auf mehrere Druckstöße verteilt wird und die mechanische Belastung beim Zurückfallen des Filtermaterials auf die Stützkörper am Ende der Abreinigung verringert wird. Durch die geringere mechanische Belastung des Filterkörpers wird darüber hinaus der Reststaub im Reingas verringert. Die Abreinigung kann zudem an verschiedene Filtersysteme und Stäube angepasst werden.

Die Zeit zwischen zwei Druckimpulsen beträgt vorzugsweise weniger als 2 s, insbesondere weniger als 1 s. Ein Reinigungszyklus dauert somit ebenfalls maximal wenige Sekunden, vorzugsweise dauert der gesamte Reinigungszyklus weniger als 1 s.

Die Öffnungszeit des mindestens einen Ventils oder mehrerer parallel geschalteter Ventile zur Erzeugung eines Druckimpulses beträgt vorzugsweise zwischen 40 und 300 ms, insbesondere 60 bis 150 ms. Dadurch kann durch mehrere kurze Druckimpulse eine Abreinigung der Filterkörper bewirkt werden.

In einer bevorzugten Ausgestaltung können der erste Druckimpuls und der zweite Druckimpuls sowie optional weitere Druckimpulse gleich groß sein. Es ist natürlich auch möglich, die Druckimpulse zu gestalten, indem der zweite Druckimpuls beispielsweise niedriger ist als der erste Druckimpuls. Dadurch kann die mechanische Belastung der Filterkörper durch den zweiten Druckimpuls und etwaige weitere Druckimpulse reduziert werden. Der Unterschied zwischen den Druckimpulsen kann bezogen auf den Druck mindestens 5 %, vorzugsweise 10%, voneinander abweichen.

Optional können nach dem zweiten Druckimpuls auch noch weitere Druckimpulse folgen während eines Reinigungszyklus, beispielsweise können drei oder vier Druckimpulse während eines Reinigungszyklus erzeugt werden.

In einer weiteren Ausgestaltung der Erfindung ist die Öffnungszeit des mindestens einen Ventils oder mehrerer parallel geschalteter Ventile bei mindestens zwei Druckimpulsen unterschiedlich lang, wobei der Unterschied in der Öffnungszeit beispielsweise mindestens 5 %, insbesondere mindestens 10 %, betragen kann. Durch unterschiedlich lange Öffnungszeiten kann sowohl die Stärke des Druckimpulses variiert werden, als auch eine Anpassung an verschiedene Stäube erfolgen. Beispielsweise kann bei Sorptionsfiltern ein Filterkuchen gelockert werden, ohne den Filterkuchen gleich abzuwerfen.

Die Zeit zwischen zwei Druckimpulsen beträgt vorzugsweise zwischen 20 ms und 500 ms, insbesondere 50 ms bis 300 ms. Dadurch wird die Länge eines Reinigungszyklus reduziert und durch kurz aufeinanderfolgende Druckimpulse die Reinigungsleistung verbessert.

Der Druckbehälter zur Erzeugung der Druckimpulse über mindestens ein Ventil und eine Leitung wird vorzugsweise mit einem Druck zwischen 2 bis 8 bar, insbesondere 3 bis 6 bar, betrieben.

Bei dem erfindungsgemäßen Verfahren kann zudem die Anzahl der Druckimpulse abhängig von dem Druckverlust an den Filterkörpern gesteuert werden. Der Druckverlust beim Durchströmen der Filterkörper wird erfasst, und bei höherer Verschmutzung kann beispielsweise die Anzahl der Druckimpulse zur Verbesserung der Abreinigung erhöht werden. Die Steuerung eines solchen Reinigungszyklus kann mit entsprechenden Programmen automatisch erfolgen.

Die Erfindung wird nachfolgend anhand eines Ausführungsbeispiels mit Bezug auf die beigefügten Zeichnungen näher erläutert. Es zeigen:

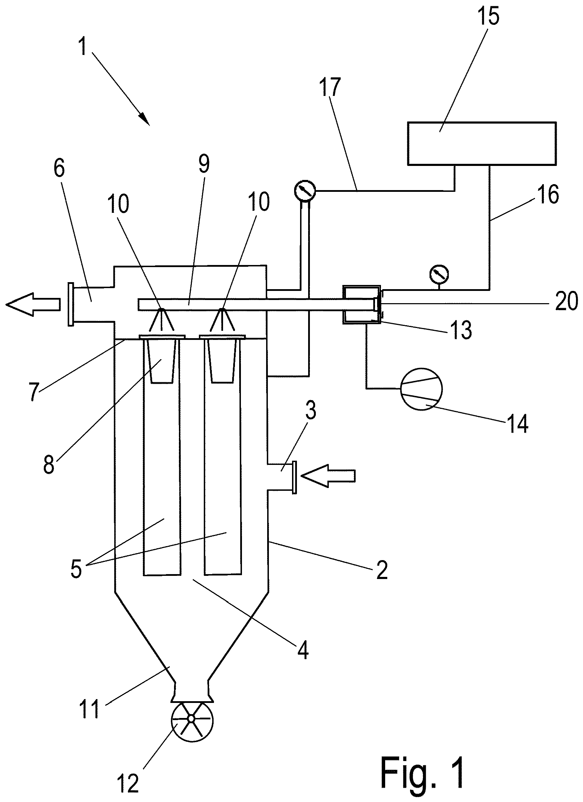

- Figur 1: eine schematische Ansicht einer Anlage zum Reinigen von Filtern, und
- Figur 2: eine schematische Ansicht eines Druck-Zeit-Diagramms bei einem Reinigungszyklus.

Eine Anlage 1 zur Reinigung von Abgasen umfasst einen Filterbehälter 2, an dem ein Einlass 3 für ein Rohgas vorgesehen ist, das in eine Filterkammer 4 einströmt. In der Filterkammer 4 sind eine Vielzahl von schlauch- oder taschenförmigen Filterkörpern 5 vorgesehen, die hängend oder auch waagerecht liegend in dem Filterbehälter 2 positioniert sind. Die Filterkörper 5 werden mit dem Rohgas durchströmt und filtern dabei Partikel und andere Verunreinigungen. Das gereinigte Rohgas kann dann durch einen Auslass 6 den Filterbehälter 2 verlassen. Die Filterkörper 5 bestehen vorzugsweise aus einem dünnwandigen textilem luftdurchlässigen Material.

In der Filterkammer 4 ist eine Platte 7 vorgesehen, an der mehrere Öffnungen ausgebildet sind, an denen jeweils ein rohrförmiger Halter 8 angeordnet ist. Der Halter 8 kann abgedichtet an der Platte 7 lösbar montiert sein, beispielsweise durch Klemm- oder Rastverbindungen. An dem Halter 8 sind die schlauchförmigen Filterkörper 5 an einem oberen Ende gehalten.

Um die Filterkörper 5 in gewissen Intervallen zu reinigen, ist ein Reinigungsrohr 9 oberhalb der Filterkörper 5 angeordnet und weist Öffnungen oder Düsen 10 auf, die einen Druckstoß in die Filterkörper 5 gegen die Durchströmrichtung zur Reinigung des Filterkörpers 5 einleiten können. Das Reinigungsrohr 9 ist mit einem Druckbehälter 13 verbunden, der über einen Kompressor 14 mit Druckluft oder einem anderen Gas gespeist wird. Das Reinigungsrohr 9 ist über ein kurzzeitig öffnenbares Ventil 20, insbesondere ein Membranventil oder mehrerer parallel geschalteter Ventile, verschlossen. Zum Erzeugen eines Druckimpulses kann das Ventil 20 oder mehrerer parallel geschalteter Ventile kurzzeitig geöffnet werden, so dass durch das Reinigungsrohr 9 ein Druckimpuls in die Filterkörper 5 eingeleitet wird. Die Anzahl der Ventile 20 kann von der Anzahl der zu reinigenden Filterkörper 5 abhängig gemacht werden. Die einzelnen Druckimpulse können wahlweise durch die gleichen Ventile 20 oder durch unterschiedliche Ventile erzeugt werden, die dann zeitversetzt kurzzeitig geöffnet werden.

Ferner ist eine Steuerung 15 vorgesehen, die über Leitungen 16 und 17 den Druck in dem Filterbehälter 2 auf beiden Seiten der Filterkörper 5 erfasst und zudem in dem Druckbehälter 13. Über die Steuerung 15 kann ein Reinigungszyklus zur Abreinigung der Filterkörper 5 automatisch gesteuert werden.

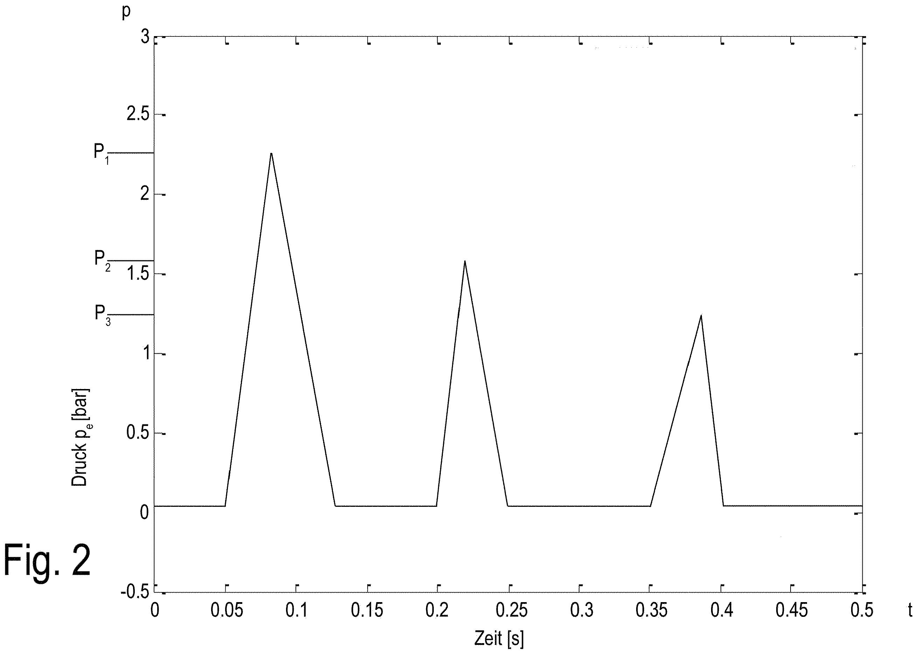

In Figur 2 ist ein Reinigungszyklus durch ein Druck-Zeit-Diagramm dargestellt. Das mindestens eine Ventil 20 oder mehrerer parallel geschalteter Ventile kann geöffnet werden, so dass der Druck in dem Reinigungsrohr 9 und den Filterkörpern 5 kurzzeitig ansteigt. Die Öffnungszeit bei dem ersten Druckimpuls kann beispielsweise zwischen 40 ms und 150 ms liegen. In dieser Zeit steigt der maximale Druck auf den Wert P₁ an, der beispielsweise zwischen 1 bar und 4 bar liegen kann. Nach dem Schließen des mindestens einen Ventils 20 oder mehrerer parallel geschalteter Ventile erfolgt eine Wartezeit zwischen 20 ms und 150 ms, insbesondere 50 ms und 300 ms, bevor ein zweiter Druckimpuls durch kurzzeitiges Öffnen des mindestens einen Ventils 20 oder mehrerer parallel geschalteter Ventile erzeugt wird. Die Öffnungszeit des mindestens einen Ventils 20 oder mehrerer parallel geschalteter Ventile ist bei dem zweiten Druckimpuls hierbei gleich, länger oder kürzer als bei dem ersten Druckimpuls, so dass der maximale Druck P₂ bei dem zweiten Druckimpuls variabel ist. Nach dem Schließen des mindestens einen Ventils 20 oder mehrerer parallel geschalteter Ventile wird nach einer weiteren Wartezeit ein dritter Druckimpuls und ggf. weitere Druckimpulse erzeugt. Bei dem dritten Druckimpuls wird ein niedrigerer Druck P₃ erzeugt als bei dem zweiten Druckimpuls. Der dargestellte Reinigungszyklus besteht aus drei Druckimpulsen, wobei natürlich auch zwei Druckimpulse oder mehr als drei Druckimpulse erzeugt werden können. Bei dem dritten Druckimpuls wird ein niedrigerer Druck P₃ erzeugt als bei dem zweiten Druckimpuls.

Zudem kann die Höhe der Druckimpulse auch gleich groß gewählt werden.

Bei einer automatischen Steuerung der Abreinigung kann über Erfassung des Druckverlustes beim Durchströmen der Filterkörper 5 und anderer Parameter die Anzahl der Druckimpulse sowie optional auch deren Länge und/oder die Höhe der Druckimpulse variiert werden.

### Bezugszeichenliste

- 1: Anlage
- 2: Filterbehälter
- 3: Einlass
- 4: Filterkammer
- 5: Filterkörper
- 6: Auslass
- 7: Platte
- 8: Halter
- 9: Reinigungsrohr
- 10: Düse
- 13: Druckbehälter
- 14: Kompressor
- 15: Steuerung
- 16: Leitung
- 17: Leitung
- 20: Ventil

- P ₁: Druck
- P₂: Druck
- P₃: Druck

## Patentansprüche

1. Verfahren zum Reinigen von Filtern aus schlauch- oder taschenförmigen Filterkörpern (5), die von einem Filtergehäuse (2) umgeben sind, mit den folgenden Schritten:
- Durchströmen der Filterkörper (5) mit einem zu reinigenden gasförmigen Fluid in eine Durchströmrichtung;
- Erzeugen eines ersten Druckimpulses an den Filterkörpern (5) gegen die Durchströmrichtung zur Reinigung der Filterkörper (5) durch kurzzeitiges Öffnen mindestens eines Ventils (20) oder mehrerer parallel geschalteter Ventile,
**gekennzeichnet durch**
- Erzeugen mindestens eines zweiten Druckimpulses an dem Filterkörper (5) gegen die Durchströmrichtung durch kurzzeitiges Öffnen mindestens eines Ventils (20) oder mehrerer parallel geschalteter Ventile zur weiteren Reinigung der Filterkörper (5) während eines Reinigungszyklus.

2. Verfahren nach Anspruch 1, **dadurch gekennzeichnet, dass** die Zeit zwischen den mindestens zwei Druckimpulsen kleiner als 2 s, vorzugsweise kleiner 1 s, ist.

3. Verfahren nach Anspruch 1 oder 2, **dadurch gekennzeichnet, dass** die Öffnungszeit des mindestens einen Ventils (20) oder mehrerer parallel geschalteter Ventile zur Erzeugung eines Druckimpulses zwischen 40 ms und 300ms, vorzugsweise 60 ms bis 150 ms, beträgt.

4. Verfahren nach einem der vorhergehenden Ansprüche, **dadurch gekennzeichnet, dass** der erste Druckimpuls und der zweite Druckimpuls etwa gleich groß sind.

5. Verfahren nach einem der Anspruch 1 bis 3, **dadurch gekennzeichnet, dass** der zweite Druckimpuls niedriger ist als der erste Druckimpuls.

6. Verfahren nach einem der vorhergehenden Ansprüche, **dadurch gekennzeichnet, dass** nach dem zweiten Druckimpuls ein dritter Druckimpuls und ggf. weitere an den Filterkörper (5) durch kurzzeitiges Öffnen mindestens eines Ventils (20) oder mehrerer parallel geschalteter Ventile zur weiteren Reinigung der Filterkörper (5) während des Reinigungszyklus erzeugt wird.

7. Verfahren nach einem der vorhergehenden Ansprüche, **dadurch gekennzeichnet, dass** die Öffnungszeit des mindestens einen Ventils (20) oder mehrerer parallel geschalteter Ventile bei mindestens zwei Druckimpulsen unterschiedlich lang ist.

8. Verfahren nach einem der vorhergehenden Ansprüche, **dadurch gekennzeichnet, dass** zwischen zwei Druckimpulsen eine Schließzeit des mindestens einen Ventils (20) oder der mehreren parallel geschalteten Ventile wischen 20 ms und 500 ms, insbesondere 50 ms und 300 ms, liegt.

9. Verfahren nach einem der vorhergehenden Ansprüche, **dadurch gekennzeichnet, dass** ein Druckbehälter (13) zur Erzeugung der Druckimpulse über mindestens ein Ventil (20) oder der mehreren parallel geschalteten Ventile und eine Leitung (9) strömungstechnisch mit den Filterkörpern (5) verbunden ist und mit einem Druck zwischen 3 bis 8 bar, insbesondere 4 bis 7 bar, betrieben wird.

10. Verfahren nach einem der vorhergehenden Ansprüche, **dadurch gekennzeichnet, dass** die Druckdifferenz beim Durchströmen der Filterkörper (5) erfasst wird und abhängig von dem Verschmutzungsgrad der Filterkörper (5) die Anzahl der Druckimpulse gesteuert wird.
